# EUROPEAN PATENT APPLICATION

(11) **EP 1 533 809 A1**
(43) Date of publication of application: **25.05.2005**
(21) Application number: 04023226.6
(22) Date of filing: 29.09.2004
(51) Int. Cl.: G11B 27/00, G11B 27/10, H04N 5/783

(54) **Signal processor**

(30) Priority: 29.09.2003 JP 2003337526
(71) Applicant: Pioneer Corporation, Meguro-ku, Tokyo (JP)
(72) Inventor: Miyashita, Masahiko, c/o Pioneer Tokorozawa Plant, Tokorozawa-City, Saitama (JP); Yamada, Takao, c/o Pioneer Tokorozawa Plant, Tokorozawa-City, Saitama (JP); Ohyama, Nobuo, c/o Pioneer Tokorozawa Plant, Tokorozawa-City, Saitama (JP); Nojima, Yoshitaka, c/o Pioneer Tokorozawa Plant, Tokorozawa-City, Saitama (JP)
(74) Representative: Betten & Resch

(57) **Abstract**

A signal processor comprises: a first buffer memory for outputting an image signal after storage; a second buffer memory for outputting an audio signal after storage; and a playback control section. The playback control section variably adjusts the playback progress speed of at least one of the image signal and the audio signal by individually controlling the output timings of the image signal and the audio signal from the first and second buffer memories in response to a given command.

## Description

### BACKGROUND OF THE INVENTION

### 1. Field of the Invention

The present invention relates to a signal processor, and in particular to a signal processor or signal processing means
for processing signals read from information recording media such as CDs (Compact Disks), DVDs (Digital Versatile Disks), and MDs (Mini Disks).

### 2. Description of the Related Art

There has been developed a digital playback system capable of audio effects control in real time through tempo (BPM: Beats Per Minute) change applied to playback audio of audio data read from an information recording medium such as CD. Such a digital playback system allows users' real-time processing so as to playback audio through operation of dials and buttons, e.g., tempo acceleration, tempo deceleration, playback pause, and backward playback. With such processing, original audio effects can be extemporaneously produced by the user. Conventionally, with an analog record player, tempo change of playback audio has been done by varying the movement speed of a phonograph needle that traces grooves formed on an analog record for audio recording. This is done by users during playback of the analog record by forcibly rotating a turntable carrying thereon the analog record with a speed different from the normal rotation speed. Such tempo change and others conventionally done with the analog record player is now done by the above-described digital playback system using CDs and DVDs which store digital information.

The conventional technology relevant to such a digital playback system is found in Japanese Patent Kokai No. 2003-132634, for example. While, in recent years, optical disks storing video information such as movies have been commonly on the market, no system is yet available for exercising real-time control over video effects during video playback from such optical disks.

### SUMMARY OF THE INVENTION

In view of the foregoing, it is an object of the present invention to provide a signal processor capable of controlling playback effects of video and audio read from a recording media.

According to the present invention, there is provided a signal processor for processing an image signal and an audio signal corresponding to the image signal. The signal processor comprises a first buffer memory for outputting the image signal after storage; a second buffer memory for outputting the audio signal after storage; and a playback control section for variably adjusting a playback progress speed of at least one of the image signal and the audio signal by individually controlling output timings of the image signal and the audio signal from the first and second buffer memories in response to a given command.

Further features of the invention, its nature and various advantages will be more apparent from the accompanying drawings and the following detailed description of the preferred embodiment.

### BRIEF DESCRIPTION OF THE DRAWINGS

FIG. 1 is a schematic block diagram illustrating an optical disk playback system (or signal processor) which is an embodiment of the present invention;
FIG. 2 is a schematic front view illustrating an outer appearance of the optical disk playback system;
FIG. 3 is a bottom view of the optical disk playback system shown in FIG. 2;
FIG. 4 is a schematic diagram illustrating output videos and audio data;
FIG. 5 is a schematic flowchart illustrating a procedure of an asynchronous playback process of a first example;
FIG. 6 is another schematic flowchart illustrating a procedure of the asynchronous playback process of the first example;
FIG. 7 is a schematic diagram illustrating exemplary output videos and audio data produced as a result of the asynchronous playback process;
FIG. 8 is another schematic diagram illustrating exemplary output videos and audio data produced as a result of the asynchronous playback process;
FIG. 9 is still another schematic diagram illustrating exemplary output videos and audio data produced as a result of the asynchronous playback process;
FIG. 10 is a schematic flowchart illustrating the procedure of an asynchronous playback process of a second example;
FIG. 11 is a schematic diagram illustrating exemplary output videos and audio data produced as a result of the asynchronous playback process;
FIG. 12 is another schematic diagram illustrating exemplary output videos and audio data produced as a result of the asynchronous playback process; and
FIG. 13 is still another schematic diagram illustrating exemplary output videos and audio data produced as a result of the asynchronous playback process.

### DETAILED DESCRIPTION OF THE INVENTION

In the below, various examples of an embodiment of the present invention will be described.

### Structure of Optical Disk Playback System

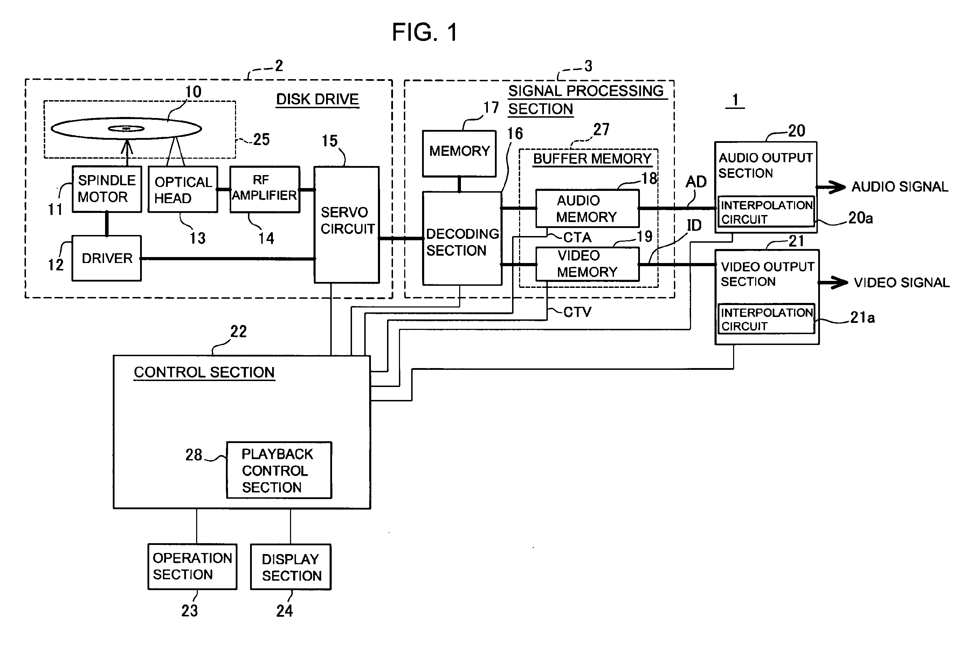

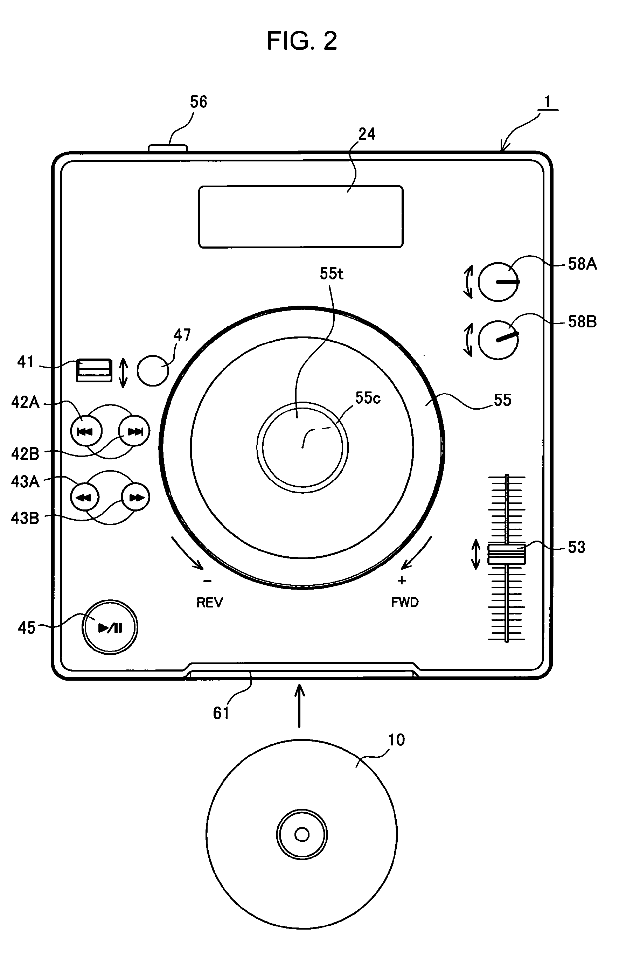

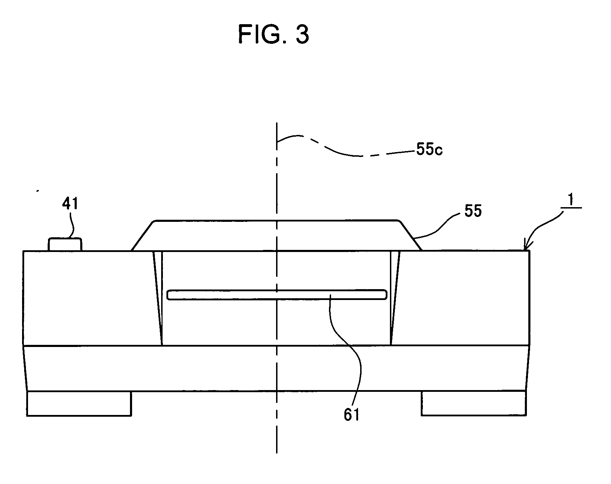

FIG. 1 is a schematic block diagram illustrating an optical disk playback system 1 of the embodiment, FIG. 2 is a schematic front view illustrating an outer appearance of this optical disk playback system 1, and FIG. 3 is a bottom view of the optical disk playback system 1 shown in FIG. 2. As shown in FIG. 1, the optical disk playback system 1 is provided with: a disk drive 2; a signal processing section 3; a control section 22; an operation section 23; a display section 24; an audio output section 20; and a video output section 21. The control section 22 is connected to the processing components 2, 3, 20, 21, 23, and 24 over a bus (not shown) which transfers control signals and data signals.

The control section 22 includes a CPU (Central Processing Unit), ROM (Read Only Memory) and RAM (Random Access Memory) storing various control programs, and an input/output interface. The control section 22 includes a playback control section 28, which will be described later, as a control program to be executed by the CPU. While, in this embodiment, the playback control section 28 is implemented in computer programs, hardware may be an alternative option.

The operation section 23 issues commands to the control section 22 in response to any external operation made by a user who uses the optical disk playback system 1. In accordance with the command provided by the operation section 23, the control section 22 generates various types of control signals for supply to the processing components 2, 3, 20, and 21. FIG. 2 is a front view illustrating the front panel of the operation section 23. This front panel includes various input buttons 42A, 42B, 43A, 43B, and others, and a jog dial (control panel) 55 which is rotatable about a center axis 55c, those of whichwill be described later.

The disk drive 2 includes a loading mechanism 25 used for loading in a detachable manner an optical disk 10 such as CD or DVD. In addition thereto, the disk drive 2 also includes a spindle motor 11, an optical head 13, an RF amplifier 14, a driver 12, and a servo circuit 15. The optical disk 10 stores signals obtained by multiplexing an image signal and its corresponding audio signal, compressing and decoding the multiplexed signal based on MPEG (Moving Picture Experts Group) format or others, and then encoding the compressed and encoded signal based on the physical format of the optical disk 10. For information reading from the optical disk 10, the spindle motor 11 receives a drive power from the driver 12 to spin the optical disk 10. Herein, the driver 12 is under the control of the servo circuit 15. At the time of information reading, the optical head 13 exposes the recording layer of the optical disk 10 to light beams so as to detect a light beam reflected on the surface of the recording layer. The optical head 13 then forwards the resulting detection signal to the RF amplifier 14. The RF amplifier 14 amplifies the detection signal provided by the optical head 13, and provides the amplified signal to the servo circuit 15. From the amplified signal provided by the RF amplifier 14, the servo circuit 15 generates a playback signal (or RF signal; Radio-Frequency signal) for output to the signal processing section 3. The servo circuit 15 also goes through a servo process of generating a tracking error signal or a focus error signal from the signals provided by the RF amplifier 14, and the resultant signals are provided to the optical head 13.

The signal processing section 3 is provided with a decoding section 16, memory 17, andbuffermemory 27. The decoding section 16 performs A/D conversion of an analog signal coming from the disk driver 2, and decodes the resulting digital signal using the memory 17 such as RAM. The decoded digital signal is separated into image data and audio data and is outputted to the buffer memory 27. The buffer memory 27 includes an audio memory (first buffer memory) 18 for temporarily storing the audio data, and a video memory (second buffer memory) 19 for temporarily storing the image data. As an exemplary structure, the buffer memory 27 may include two-port memory for image data storage, and another for audio data storage. The audio memory 18 and the video memory 19 latch incoming data with a predetermined timing responding to input/output control signals CTA and CTV provided by the control section 22, and read out their own addressed storage data for output. As a result, the audio memory 18 outputs an audio signal AD to the audio output section 20, and the video memory 19 outputs an image signal ID to the video output section 21.

To the audio signal AD received from the buffer memory 27, the audio output section 20 subjects a filtering process and a modulation process, and forwards the result to an externally-located audio playback system (not shown). The audio output section 20 includes an interpolation circuit 20a that goes through an interframe interpolation process and a decimation process. The video output section 21 subjects the image signal ID received from the buffer memory 27 to various types of processes, i.e. , color tone process, filtering process, noise elimination process, and modulation process. As a result, a video signal is generated, and is forwarded to an externally-provided display unit (not shown). The video output section 21 includes an interpolation circuit 21a that performs interframe interpolation and decimation. Note here that the control section 22 individually controls the operations of the audio output section 20 and the video output section 21.

Referring to FIG. 2, responding to a user's action by pressing a power switch 56 of the optical disk playback system 1, the control section 22 (see FIG. 1) detects the press of the power switch 56. Thereafter, the control section 22 reads an initial program from internally-provided ROM (not shown) for execution so that the optical disk playback system 1 is activated in system. When the user inserts the optical disk 10 from a disk insertion port 61 of FIGS. 2 and 3, the loading mechanism 25 (see FIG. 1) guides the inserted optical disk 10 to inside so that the optical disk 10 is loaded at a predetermined position. Herein, with a press of an eject button (not shown), the loaded optical disk 10 can be ejected from the optical disk playback system 1.

In the below, operations of the optical playback system 1 of the above structure will be described in detail.

### Basic Operation

When the user presses a playback button 45 with the loading mechanism 25 loading the optical disk 10, the control section 22 detects the press of the playback button 45. Then, recording data is read from the optical disk 10 to start playback of video and audio. At this time, the playback control section 28 (see FIG. 1) provides control signals CTV and CTA to both the video memory 19 and the audio memory 18 to individually control the memories 19 and 18. The playback control section 28 allows the video memory 19 and the audio memory 18 to output the image signal ID and the audio signal AD, respectively. The video output section 21 and the audio output section 20 then forward the video signal and the audio signal, respectively.

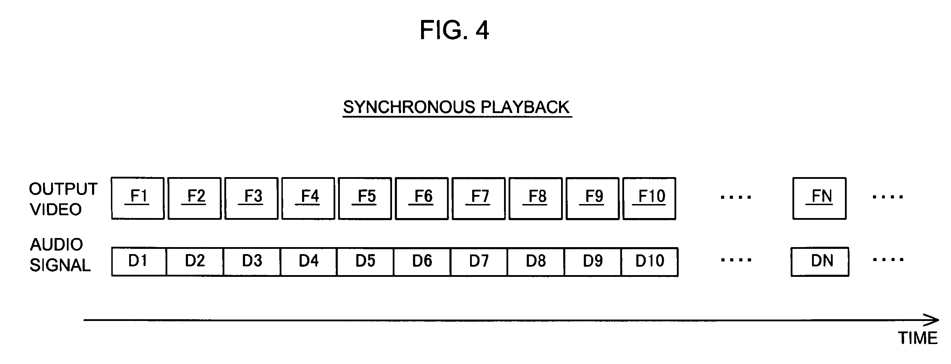

FIG. 4 is a schematic diagram illustrating output videos coming from the video output section 21 for display on a frame basis, and audio signals coming from the audio output section 20. In the drawing, along a temporal axis, displayed are image frames structuring the output videos, i.e., F1, F2, F3, ..., FN and others, and audio data structuring the audio signals, i. e. , D1, D2, D3, ..., DN and others. Between the output videos and the audio signals, temporal synchronization is established. To show such temporal synchronization, the audio data D1, D2, D3, ..., DN and others are so displayed as to be placed at the same position on the temporal axis as the image frames F1, F2, F3, ..., FN and others. In the present embodiment, for convenience of description, the output videos are displayed in a sequential manner on a frame basis (progressively displayed). Here, the interlaced display may be an option which displays the output videos alternately between even fields locating on even-numbered lines and odd fields locating on odd-numbered lines.

When the user presses the playback button 45 during such a synchronous playback operation, the control section 22 detects the press of the playback button 45, and temporarily suspends the operation of the system. In detail, the playback control section 28 temporarily stops driving the optical disk 10, and allows the buffer memory 27 to repeatedly output an image frame at the time when the playback button 45 is pressed to fix the playback video. In this manner, the display unit keeps displaying the same image frame. If the user presses the playback button 45 again during when the system is temporarily suspended, the control section 22 detects the press, and puts the system back to the synchronous playback operation. Responding to the user's action by pressing the eject button (not shown), the control section 22 ends the synchronous playback operation, and makes the loading mechanism 25 eject the optical disk 10.

The user may slide a slider (speed adjustment knob) 53 upward or downward to change the playback progress speed of video and audio. The playback control section 28 detects the position of the slider 53, and changes the playback progress speed in accordance with the position. The lower the slider 53 slides, the faster the playback progress speed becomes, and the upper the slider 53 slides, the slower the playback progress speed becomes. Herein, the playback progress speed (hereinafter referred to as "playback speed") denotes a temporal change rate of video information and audio information. For example, assuming that video information recorded on the optical disk 10 displays a clock telling the time, if the playback speed is doubled, the progress speed of the time displayed by the image of clock is also doubled, and the time interval for time-telling is reduced to a half.

If the user presses a search button 42B or 42A, the playback control section 28 detects the press, and makes the playback position of video and audio skip in the forward or backward direction on a file basis. More in detail, when the search button 42B locating on the right is pressed once, the playback position is skipped in the forward direction to the head position of the next file. When the search button 42A on the left is pressed once, the playback position is skipped in the backward direction to the head position of the current or previous file. If the user presses a fast-forward button 43B or a fast-backward button 43A, the playback control section 28 detects the press, and plays back video and audio in the forward or reverse direction faster in speed than usual to fast-forward or fast-backward the video and audio for playback.

Described next is the playback effects referred to as "braking", "spinning", and "scratching". The playback control section 28 can individually control the audio memory 18, the video memory 19, the audio output section 20, and the video output section 21. The playback control section 28 has a speed control function of controlling, in real time, the playback speed of video and audio to be played back from the image signal ID and the audio signal AD coming from the buffer memory 27. The "braking", "spinning", and "scratching" are the playback effects produced by such a speed control function. Specifically, the "braking" is an effect observed when the playback speed of video and audio is abruptly reduced. To produce such an effect, the user may press the playback button 45. In response, the playback control section 28 abruptly reduces the playback speed of video and audio at a predetermined change rate for temporary system suspension. Thereafter, if the user presses the playback button 45 again, the playback control section 28 abruptly increases the playback speed of video and audio up to the normal speed at a predetermined change rate. Herein, a suspension adjustment knob 58A is input means for adjusting the change rate when the playback speed of video and audio is reduced, and a start adjustment knob 58B is input means for adjusting the change rate when the playback speed is increased. Through operation of the suspension adjustment knob 58A and the start adjustment knob 58B, the user can change the playback speed at any desired change rate to produce his or her desired video and audio effects.

The "spinning" is an effect observed when the playback speed of video and audio is suddenly changed differently from the normal speed. To produce such an effect, the user may press a top board 55t of the jog dial 55 or the playback button 45 for temporary system suspension, and then may spin the jog dial 55. In response, the playback control section 28 detects the rotation speed and direction of the jog dial 55, and even if the user releases the jog dial 55, plays back the video and audio with the speed corresponding to the detected rotation speed and direction. When the jog dial 55 is rotated clockwise, the video and audio are played back in the forward direction, and when the jog dial 55 is rotated counterclockwise, the video and audio are played back in the reverse direction.

The "scratching" is an effect observed when the playback speed of video and audio is forcibly changed. To produce such an effect, the user may rotate the jog dial 55 with the top board 55t thereof pressed. In response, the playback control section 28 temporarily stops playing back the video and audio, and then starts playback of the video and audio with the playback speed corresponding to the rotation angle and direction of the jog dial 55. When the jog dial 55 is rotated clockwise, the video and audio are played back in the forward direction, and when the jog dial 55 is rotated counterclockwise, the video and audio are played back in the reverse direction. Through operation of the jog dial 55, the user can change the playback speed in real time so that his or her desired specific video and audio effects can be produced.

### First Example of Asynchronous Playback Process

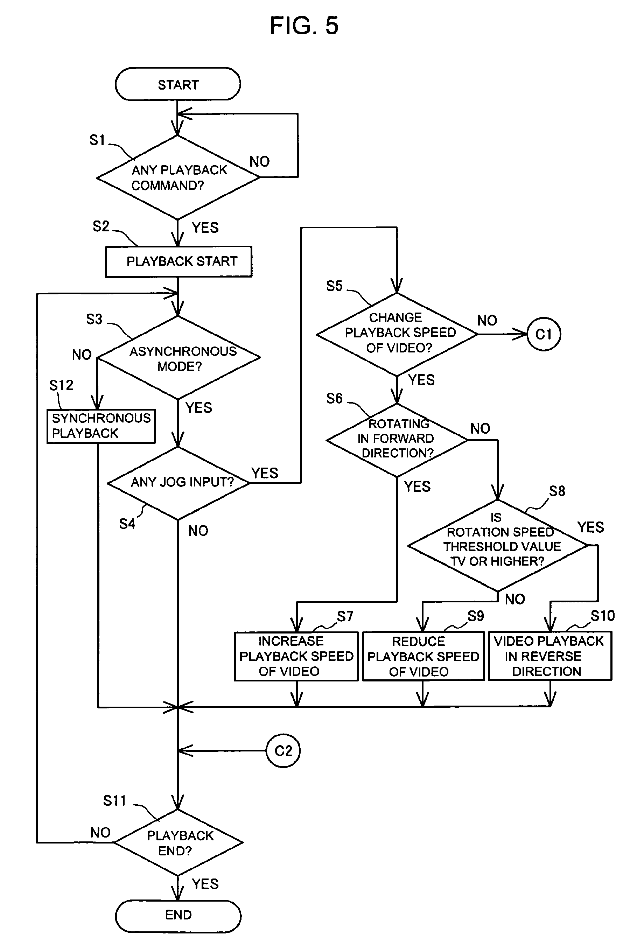

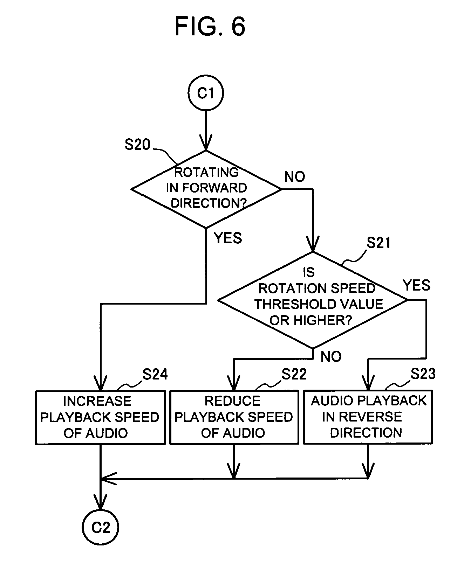

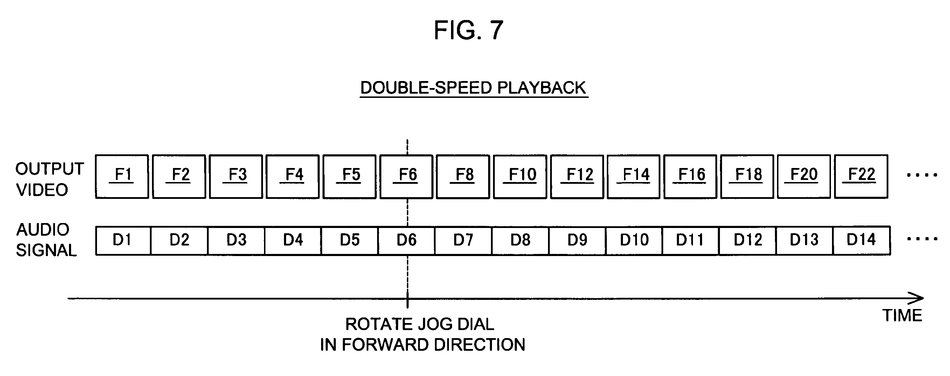

Described next is the asynchronous playback process by referring to FIGS. 5 to 9. FIGS. 5 and 6 are both a schematic flowchart illustrating procedures of an asynchronous playback process of a first example. In the flowcharts, flowchart connectors C1 and C2 indicate continuation of FIG. 5 to FIG. 6. FIGS. 7 to 9 are all a schematic flowchart illustrating exemplary output videos and audio data to be generated as a result of the asynchronous playback process.

Referring to FIG. 5, first in step S1, the control section 22 makes a determination whether a playback command is coming from the operation section 23. The control section 22 is in the wait state until a playback command comes from the operation section 23. Responding to the user's action by pressing the playback button 45, the operation section 23 issues a playback command, and the playback control section 28 detects the command. As a result, the playback command is determined as coming, and playback is started for video and audio (step S2).

In the next step S3, the playback control section 28 makes a determination whether the system is in an asynchronous mode. Specifically, when a shift switch 41 is flipped up, the playback control section 28 goes through the synchronous playback operation described above, and when the shift switch 41 is flipped down, the playback control section 28 determines that the system is in the asynchronous mode through detection of such flip-down. Then, the playback control section 28 makes another determination whether the playback command is coming based on existence of a jog input, i.e., based on rotation of the jog dial 55 (step S4). When the jog dial 55 is determined as not rotating, the procedure goes to step S11.

On the other hand, when the jog dial 55 is determined as rotating in step S4, through detection of such rotation, the playback control section 28 determines that a jog input is made. Then, the procedure goes to step S5 and onward. Specifically, determined in step S5 is whether or not to change the playback speed of video. In the default operation, the playback control section 28 determines to change the playback speed of video, and the procedure goes to step S6 and onward. On the other hand, if a selection button 47 (see FIG. 2) is being pressed, through detection of the press, the control section 28 determines not to change the playback speed of video, i. e. , to change the playback speed of audio. Thereafter, the procedure goes to step S20 and onward (see FIG. 6).

In step S6, through detection of the rotation direction of the jog dial 55, the playback control section 28 makes a determination whether the rotation direction is in the forward direction (FWD) or not, i.e., whether clockwise or counterclockwise. When the jog dial 55 is rotating in the forward direction (FWD), i.e. , clockwise, the playback control section 28 increases the playback speed of video than the normal speed (step S7). To be specific, the playback control section 28 allows the interpolation circuit 21a in the video output section 21 to go through a decimation process of decimating image frames while controlling the timing of outputting the audio signal AD and the image signal ID from the buffer memory 27. In this manner, the playback speed of video can be increased to be faster than the normal speed. Referring to FIG. 7, until the jog dial 55 is rotated in the forward direction, the video and audio are synchronously played back, and synchronization is observed among the image frames F1, F2, F3 and others, and the audio data D1, D2, D3 and others. At the time point when the image frame F6 is displayed, the jog dial 55 is started rotating in the forward direction. Thereafter, the image frames are displayed alternately, i.e., F8, F10, F12, F14 and other even-numbered frames. In this way, the output videos are played back with the speed twice faster than the audio.

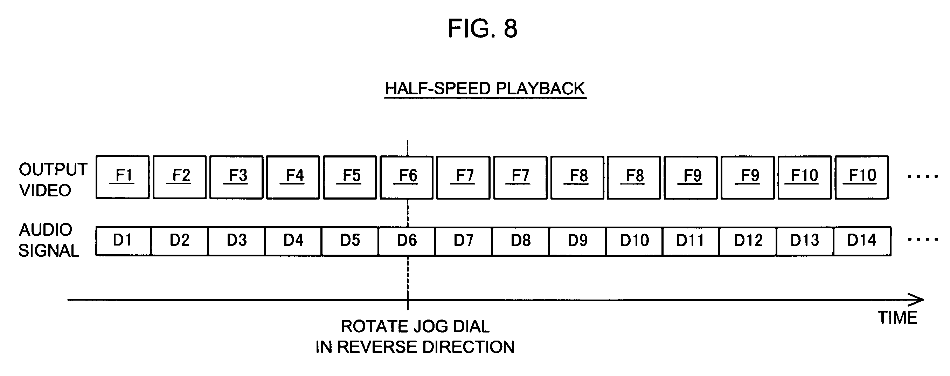

When the jog dial 55 is determined in step S6 as rotating in the reverse direction, i.e., counterclockwise, the playback control section 28 then makes another determination whether the rotation speed is a predetermined threshold value TV or higher (step S8). If the rotation speed is determined as being smaller than the threshold value TV, the playback control section 28 decreases the playback speed of video to be slower than the normal speed (step S9). To be specific, the playback control section 28 allows the interpolation circuit 21a in the video output section 21 to go through an interframe interpolation process of interpolating image frames while controlling the timing of outputting the audio signal AD and the image signal ID from the buffer memory 27. In this manner, the playback speed of video can be increased to be faster than the normal speed. Referring to FIG. 8, until the jog dial 55 is rotated in the reverse direction, the video and audio are synchronously played back, and synchronization is observed among the image frames F1, F2, F3 and others, and the audio data D1, D2, D3, and others. At the time point when the image frame F6 is displayed, the jog dial 55 is started rotating in the reverse direction. Thereafter, the image frames F7, F7, F8, F8, F9, F9, ... are displayed sequentially. In this way, the output video is played back with the speed twice slower than the audio.

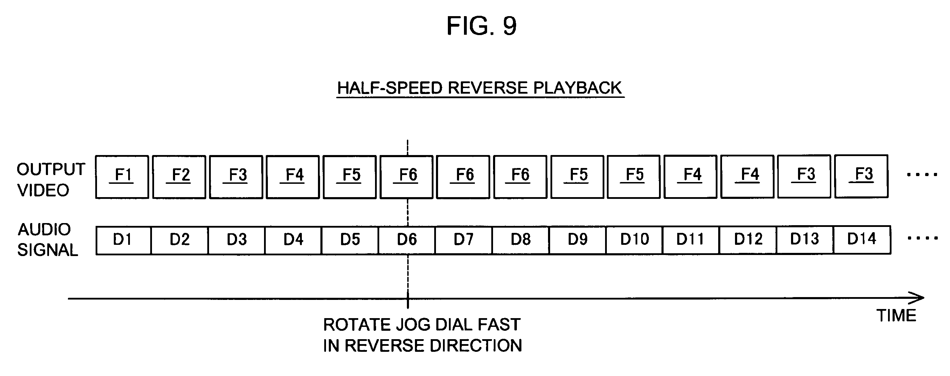

In step S8, when the jog dial 55 is determined as rotating in the reverse direction with the speed equal to or higher than the threshold value TV, the playback control section 28 goes through video playback in the reverse direction (step S10). To be specific, the playback control section 28 addresses the audio data stored in the audio memory 18 in the forward direction in the temporal sense, and the image data stored in the video memory 19 in the reverse direction in the temporal sense. In this manner, video playback can be done in the reverse direction. Referring to FIG. 9, until the jog dial 55 is rotated in the reverse direction, the video and audio are synchronously played back, and synchronization is observed among the image frames F1, F2, F3, and others, and the audio data D1, D2, D3 and others. At the time point when the image frame F6 is displayed, the jog dial 55 is started rotating fast in the reverse direction. Thereafter, the image frames F6, F6, F5, F5, F4, F4, F3, F3, F2, F2, ... are displayed sequentially. In this way, the output videos are played back with the speed twice slower than the audio in the reverse direction.

After completion of the processes of steps S7, S9, and S10, the procedure goes to step S11.

On the other hand, through detection of the selection button 47 pressed, when the playback control section 28 determines in step S5 as not to change the playback speed of video, the procedure goes to step S20 and onward of FIG. 6. In step S20, the playback control section 28 detects the rotation direction of the jog dial 55 to determine whether the rotation direction is forward or not, i.e., clockwise or counterclockwise. When determining that the jog dial 55 is rotating in the forward direction, i.e., clockwise, the playback control section 28 increases the playback speed of audio to be faster than the normal playback speed of video (step S24). In this case, for example, the playback speed of audio may be increased to be twice of the playback speed of video. On the other hand, when determining in step S20 that the jog dial 55 is rotating in the reverse direction, i.e., counterclockwise, the playback control section 28 then makes another determination whether the rotation speed is a predetermined threshold value TA or higher (step S21). If the rotation speed is smaller than the threshold value TA, the playback control section 28 decreases the playback speed of audio to be slower than the normal playback speed of video (step S22). In this case, for example, the playback speed of audio may be decreased to be a half of the playback speed of video. On the other hand, if the rotation speed is determined as being equal to or larger than the threshold value TA in step S21, the playback control section 28 reverses the playback direction of audio (step S23). In this case, for example, the playback speed of audio may be decreased to be a half of the normal playback speed in the reverse direction. After completion of the processes of steps S24, S22, and S23, the procedure goes to step S11.

In step S11, the control section 22 determines whether or not to end the playback operation. In response to the user' s action by pressing an end button (not shown) orothers, the control section 22 determines to end the playback operation, and the procedure is accordingly terminated.

On the other hand, if the control section 22 determines not to end the playback operation in step S11, the procedure repeats step S3 and onward. In this case, responding to the user's action by flipping up the shift switch 41 that has been flipped down, the playback control section 28 determines in step S3 that the system is not in the asynchronous mode, and thus goes through synchronous playback of video and audio (step S12). For example, once the shift switch 41 is flipped up, the asynchronously-played-back videos as shown in FIGS. 7 to 9 become synchronized with audio.

In a case where the determination in step S3 exists that the system is in the asynchronous mode, and the determination in step S4 is made that no jog input is made, the playback control section 28 maintains the deviation of playback speed between video and audio. Thus, the once-produced deviation of the playback speed can be maintained without the need for any new playback command from the operation section 23.

Herein, as an exemplary asynchronous playback operation, described above are double-speed playback (FIG. 7), half-speed playback (FIG. 8), and half-speed reverse playback (FIG. 9), no limitation thereto intended. The system may be designed so as to produce the playback speed of any arbitrary speed scale depending on the rotation speed of the jog dial 55.

Moreover, not to degrade the image and audio quality due to the change of the playback speed, or to improve the image and audio quality, the audio output section 20 and the video output section 21 include the interpolation circuits 20a and 21a, respectively. These interpolation circuits 20a and 21a each have a capability of performing interframe interpolation or decimation on sampled input signals in accordance with a control signal coming from the control section 22. The audio output section 20 and the video output section 21 can reduce the playback speed of video and audio by performing the interframe interpolation of audio frames and image frames with a predetermined output rate retained. Also, the audio output section 20 and the video output section 21 can increase the playback speed of video and audio by performing the decimation of audio frames and image frames with a predetermined output rate retained.

As described in the foregoing, according to the asynchronous playback process, in response to a playback command based on the rotation direction and speed of the jog dial 55, the playback control section 28 individually adjusts the playback speed of the video signal ID and that of the audio signal AD to generate a speed deviation therebetween. This thus allows asynchronous playback with user's desired speed deviation between video and audio, leading to their desired original video and audio effects.

### Second Example of Asynchronous Playback Process

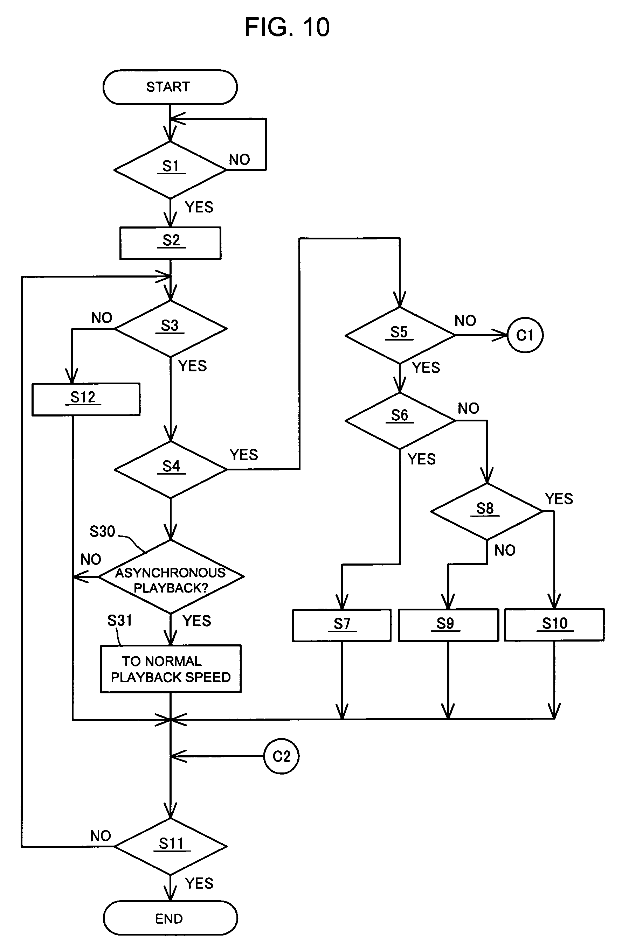

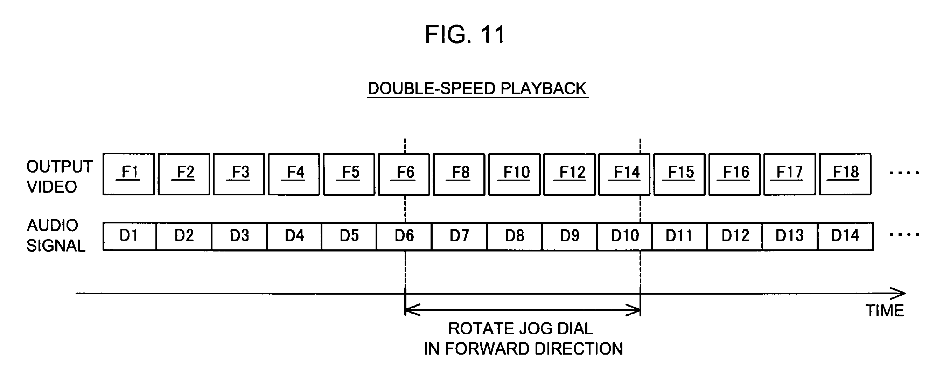

Described next is the asynchronous playback operation by referring to FIGS. 10 to 13. FIG. 10 is a schematic flowchart illustrating the procedure of an asynchronous playback operation of a second example, and FIGS. 11 to 13 are all a schematic diagram illustrating exemplary output videos and audio data produced as a result of the asynchronous playback process. The flowchart of FIG. 10 is the same as that of FIG. 5 except that a process block of steps S30 and S31 is inserted between steps S4 and S11. In the flowcharts, flowchart connectors C1 and C2 indicate continuation of FIG. 10 to FIG. 6.

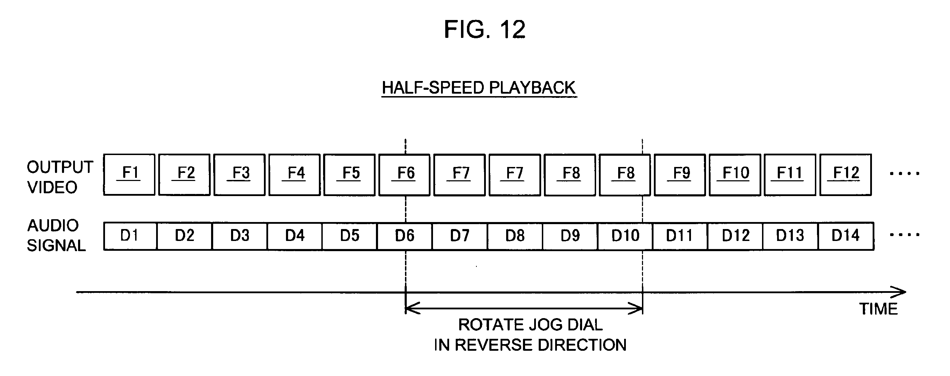

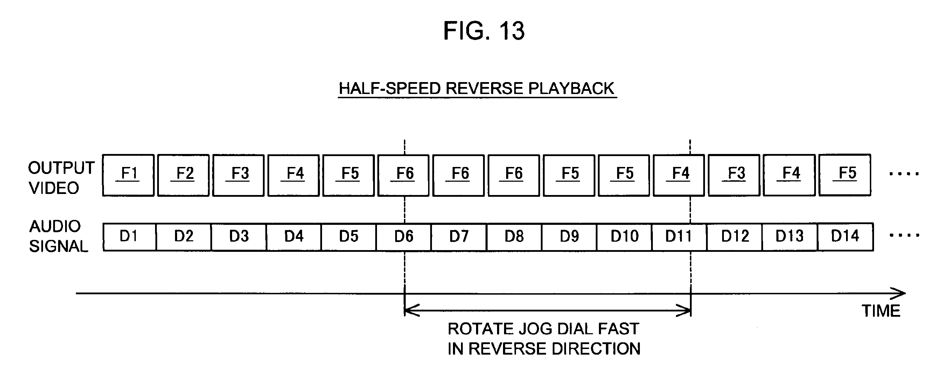

Referring to FIG. 10, in steps S1 to S4, executed are the same processes as steps S1 to S4 of FIG. 6. When the playback control section 28 determines in step S4 that a jog input exists, the processes of steps S5 to S10, or those of steps S20 to S24 (see FIG. 6) are executed. As a result, the playback speed of video deviates from the playback speed of audio, or the playback speed of audio deviates from the playback speed of video. Referring to FIGS. 11 to 13, until the jog dial 55 is rotated, the video and audio are synchronously played back, and synchronization is observed between the image frames F1, F2, F3, and others, and the audio data D1, D2, D3, and others. At the time point when the image frame F6 is displayed, the jog dial 55 is started rotating. After this point in time, video and audio are asynchronously played back. In an example shown in FIG. 11, the video is played back with a speed twice as that of the audio, and in an example shown in FIG. 12, the video is played back with a speed half as that of the audio. In an example shown in FIG. 13, the video is played back with a speed half as that of the audio in the reverse direction.

In step S11, when the control section 22 determines not to end the playback operation, the procedure repeats steps 3 and onward. In this case, if the playback control section 28 determines in step S4 that no jog input exists, another determination is made whether the video or audio is asynchronously played back (step S30). Here, if it is determined that no asynchronous playback is executed, the procedure goes to step S11. On the other hand, if it is determined in step S30 that the asynchronous playback is executed, the playback control section 28 executes the process of putting back the playback speed of video or audio to a normal speed (step S31), and thereafter, the procedure goes to step S11. As described, if a user wants to maintain the playback speed of video or audio different from the normal speed, he or she has to continue rotating the jog dial 55. Once the rotation of the jog dial 55 is stopped, the playback command is stopped to go from the operation section 23 to the control section 22. Thus, the procedure goes to step S31 so that the playback speed of video or audio is put back to the normal speed.

Referring to FIG. 11, the jog dial 55 is continuously rotated in the forward direction after the image frame F6 is displayed, and the rotation of the jog dial 55 is stopped after the image frame F14 is displayed. Thereafter, the playback speed of video is put back to the normal speed, and the image frames F15, F16, F17, F18, ... are sequentially displayed. Referring to FIG. 12, the jog dial 55 is continuously rotated in the reverse direction after the image frame F6 is displayed, and the rotation of the jog dial 55 is stopped after the image frame F8 is displayed. Thereafter, the playback speed of video is put back to the normal speed, and the image frames F9 , F10, F11, F12, ... are sequentially displayed. Moreover, referring to FIG. 13, the jog dial 55 is continuously rotated fast in the reverse direction after the image frame F6 is displayed, and the rotation of the jog dial 55 is stopped after the image frame F4 is displayed. Thereafter, the playback speed of video is gradually put back to the normal speed, and the image frames F3, F4, F5, F6, F7, ... are sequentially displayed.

According to the asynchronous playback process of this example, in the period of time when no playback command comes based on the rotation direction and speed of the jog dial 55, the playback control section 28 puts the deviated playback speed of video or audio back to the normal playback speed to adjust the playback speeds to the same speed. This allows users to easily control the deviation of the playback speed.

It is understood that the foregoing description and accompanying drawings set forth the preferred embodiments of the invention at the present time. Various modifications, additions, and alternatives will, of course, become apparent to those skilled in the art in light of the foregoing teachings without departing from the spirit and scope of the disclosed invention. Thus, it should be appreciated that the invention is not limited to the disclosed embodiments but may be practiced within the full scope of the appended claims.

According to an embodiment, in summary, a signal processor comprises: a first buffer memory for outputting an image signal after storage; a second buffer memory for outputting an audio signal after storage; and a playback control section. The playback control section variably adjusts the playback progress speed of at least one of the image signal and the audio signal by individually controlling the output timings of the image signal and the audio signal from the first and second buffer memories in response to a given command.

## Claims

1. A signal processor for processing an image signal and an audio signal corresponding to the image signal, the signal processor comprising:
a first buffer memory for outputting the image signal after storage;
a second buffer memory for outputting the audio signal after storage; and
a playback control section for variably adjusting a playback progress speed of at least one of the image signal and the audio signal by individually controlling output timings of the image signal and the audio signal from said first and second buffer memories in response to a given command.

2. A signal processor according to claim 1, wherein said playback control section cause one of the playback progress speeds of the image signal and the audio signal to deviate from the other in response to the given command.

3. A signal processor according to claim 1 or 2, wherein in a time period when no other command comes after the command is given, said playback control section maintains the deviation of the playback progress speed between the image signal and the audio signal.

4. A signal processor according to claim 1 or 2, wherein in a time period when no other command comes after the command is given, said playback control section adjusts one of the playback progress speeds of the image signal and the audio signal to the other.

5. A signal processor according to any one of claims 1 to 4, further comprising an operation section for generating the command in response to an external operation.

6. A signal processor according to claim 5, wherein
said operation section is provided with a rotary control panel, and
said playback control section causes one of the playback progress speeds of the image signal and the audio signal to deviate from the other in response to the command provided based on a rotation angle and a rotation direction of said rotary control panel.

7. A signal processor according to claim 6, wherein
said playback control section causes the image signal to output from said first buffer memory in either a forward or reverse direction for playback in accordance with the rotation direction of said rotary control panel.

8. A signal processor according to any one of claims 1 to 7, further comprising:
a loading mechanism for loading an information recording medium in a detachable manner;
a recording medium driving section for reading a playback signal from the information recording medium; and
a signal processing section for generating the image signal and the audio signal by decoding the playback signal.
